# EUROPEAN PATENT SPECIFICATION

(11) **EP 2 811 727 B1**
(45) Date of publication and mention of the grant of the patent: **07.10.2020**
(21) Application number: 13382487.0
(22) Date of filing: 02.12.2013
(51) Int. Cl.: H04M 3/56, H04L 12/18, H04L 29/06, H04M 3/42, H04M 7/12, H04M 1/725

(54) **Conference call set-up**
Konferenzanrufaufbau
Établissement d'un appel de conférence

(30) Priority: 07.06.2013 EP 13382219
(43) Date of publication of application: 10.12.2014
(73) Proprietor: Vodafone IP Licensing Limited, The Connection Newbury Berkshire RG14 2FN (GB); Vodafone España, S.A.U., 28042 Madrid (ES)
(72) Inventor: Riesco Fernandez, Marco, 28042 MADRID (ES); Martinez Perea, Rogelio, 28042 MADRID (ES); Dominguez Gonzalez, Rafael, 28042 MADRID (ES)
(74) Representative: Boult Wade Tennant LLP

(56) References cited:
- US-A1- 2006 250 987
- US-A1- 2007 032 223

## Description

### Technical Field of the Invention

The invention concerns a method and apparatus for facilitating the set-up of a conference call over a telecommunication network, the call being between a first user and a one (or more) second user(s) of said network.

### Background to the Invention

In nowadays business environment the ability of interacting with colleagues, partners, clients, etc. is becoming more and more important. This, coupled with the increased mobility of today's workforce, the constraints put on budget, the need for interacting quickly, and other factors, has resulted in an increased use of conference calls as the way of communicating.

In addition, workforce nowadays rely more and more on the use of mobile communication devices (e.g., mobile phones, smartphones, tablets, laptops, etc.) capable of communicating over the various telecommunication networks that are available.

Is it therefore important to provide a solution that facilitates the set-up of a conference call over a telecommunication network, in which the call is between a first user and a one or more second users of said network.

In US-2006/250987 (D1), a user of a communication terminal 3a wishes to set up a conference call and makes a request 4 using a short message service (SMS) message, which lists telephone numbers 5, 6, 7 of the other participants to be invited to take part in the conference call. The conference call server 1 receives this SMS message and generates another SMS message for the user of the communication terminal 3a, confirming that the conference has been created and notifying the user of the assigned telephone number. The conference call server 1 then generates invitation messages, inviting the remaining participants to join the conference call and providing them with the telephone number of the conference call. The participants dial the number provided and the conference call server carries out checks on each call received, before admitting the caller to the conference call if appropriate.

This is known as a dial-in conference call. Firstly, the messages sent from the server to the participants do not automatically trigger the participants to start the call. Moreover, there is no suggestion that the server would call any of the participants to enter them into the conference (so-called dial-out conference call initiation).

US-2007/032223 (D2) also deals with the use of a SMS message, for example to set up a call. As explained in paragraphs [0019] to [0025], the information in the SMS is processed by the receiving device, which uses it to determine a number to call and a time at which to do so. This is not in the context of facilitating the set-up of a conference call, however and this document therefore lacks at least the steps of: receiving at a server a set up request; sending from the server from a first device a first number for enabling the first device to connect to a conference call; and triggering call from the server to a second device, to enable the second device to connect to the conference call.

### Summary of the Invention

The invention is set out in the appended set of claims. The embodiments and/ or examples of the following description which are not covered by the appended claims are considered as not being part of the present invention. Against the above mentioned background and in a first aspect, the present invention provides a method for facilitating the set-up of a conference call over a telecommunication network, the call being between a first user and a second user of said network. The method may comprise receiving at a server a set-up request triggered by a first device associated with the first user, wherein the request is for setting-up the conference call, the request including an identification number associated with the second device. Additionally, the method my comprise sending from the server to the first device a first number for enabling the first device to connect to the conference call, wherein receipt of the first number at the first device automatically triggers an originating call in accordance with the first number for enabling the first device to connect to the conference call. The set-up of a conference call is thus simple and involves minimal user input.

The method may comprise, at the first device, automatically triggering an originating call in accordance with the first number in response to receipt of the first number for enabling the first device to connect to the conference call.

The method further comprises triggering a call from the server to the second device in accordance with the received identification number, wherein the call is for enabling the second device to connect to the conference call. The call may be a terminating call, or any suitable/equivalent type of call. For example, it may be a call that is converted into a terminating call after it has been launched (e.g., by the server and/or the first device). A terminating call is usually an outbound call that "terminates" to a recipient of said call, for example from the network (e.g., from the server and/or any other element of the network) to the recipient of said call. Additionally, the server may present an identification number of the first device to the second device when triggering the call.

The method may comprise checking the identification number associated with the second device against a list of identification numbers stored in a database, wherein if the identification number does not exist, the method may further comprise sending a notification to the second device, the notification including a bridge number. Optionally, the method may comprise receiving a second request from the second device to connect to the conference call; and enabling connection of the second device to the conference call.

The set-up request may comprise a first identification number associated with the first device and information about a scheduled time for the conference call.

Further the method may comprise allocating a virtual conference room to the conference call and generating a unique conference identifier associated with the allocated virtual conference room.

The triggering of the call may be performed upon the first device being connected to the conference call.

In a second aspect, the present invention may provide a system for facilitating the set-up of a conference call over a telecommunications network, the call being between a first user and a second user of said network, the system comprising a server and an application configured to run at a first device associated with the first user, wherein the server comprises: means for receiving at the server a set-up request triggered by a first device associated with the first user, wherein the request is for setting-up the conference call, the request including an identification number associated with the second device; means for sending from the server to the first device a first number for enabling the first device to connect to the conference call; and means for receiving a call from the first device in accordance with the first number and enabling the first device to connect to the conference call, and wherein the application comprises: means for receiving, at the first device, a selection from the first user; means for triggering, based on said selection, the set-up request to be sent from the first device to the server, the request including an identification number associated with the second device; and means for triggering an originating call in accordance with the first number in response to receipt of the first number for enabling the first device to connect to the conference call.

The server further comprises means for triggering a call from the server to the second device in accordance with the received identification number, wherein the call is for enabling the second device to connect to the conference call. Additionally the system may be adapted to perform the relevant functionality of the above method.

A server for facilitating the set-up of a conference call over a telecommunication network may also be provided, the call being between a first user and a second user of said network, the server being adapted for use in the above system and adapted to perform the relevant functionality of the above method.

An application for facilitating the set-up of a conference call over a telecommunication network may also be provided, the call being between a first user and a second user of said network, the application configured to run at a first device associated with the first user, the application being configured for use in the above system, the application comprising: means for receiving, at the first device, a selection from the first user; means for triggering, based on said selection, the set-up request to be sent from the first device to the server, the request including an identification number associated with the second device; and means for triggering an originating call in accordance with the first number in response to receipt of the first number for enabling the first device to connect to the conference call.

In an ancillary aspect, the present invention may provide a method for facilitating the set-up of a conference call over a telecommunication network. The call is between a first user and a second user of said network. The method comprises receiving at a server a set-up request triggered by a first device associated with the first user, wherein the request is for setting-up the conference call. Further, the method comprises sending from the server to the first device a first number for enabling the first device to connect to the conference call. Further, the method comprises sending from the server to the second device a second number for enabling a second device associated with the second user to connect to the conference call.

The first and second numbers may be selected from a pool of numbers available for setting up the conference calls. These numbers could be bridge numbers. The first and second number could be the same number or, alternatively, could each be a different number.

The set-up request may comprise a first identification number associated with the first device, a second identification number associated with the second device and information about a scheduled time for the conference call.

The method may further comprise allocating a virtual conference room to the conference call. Further, the method may comprise generating a unique conference identifier associated with the allocated virtual conference room. The unique conference identifier may be generated based on the first identification number, the second identification number and a set of numbers available for enabling connection to the conference call. The allocating may further comprise determining, based on the first identification number, the second identification number and the scheduled time, whether the conference call can be set-up. A "virtual" conference room may imply and/or include provision of various resources at the server and/or by the server (e.g., dedicated resources at the server, space in database, available bridge numbers, available ports for connection at the server, etc.). For example, there may be resources reserved for the conference call. These resources may depend on, for example, the number of participants, the date, the time and the duration scheduled for the call and/or other parameters. In addition, there may also be information in a database associated with the server (see below). This information may refer to the participants (e.g., their details, etc.) or to the main parameters of the conference call (e.g., time, date, duration, resources to be allocated, etc.).

The method may further comprise receiving a first request from the first device to connect to the conference call; and enabling connection of the first device to the conference call. The enabling connection of the first device may further comprises performing a first verification as to which allocated virtual conference room is associated with the first identification number; and connecting, upon the verification, the first device to the conference call.

Also, the method may further comprise receiving a second request from the second device to connect to the conference call; and enabling connection of the second device to the conference call. The enabling connection of the second device may further comprise performing a second verification as to whether the second device is allowed to connect to the conference call; and connecting, upon the second verification, the second device to the conference call.

The method may further comprise performing a first call from the server to the first device, wherein the first call is for enabling the first device to connect to the conference call. Optionally, the method may further comprise, upon the first device being connected to the conference call, performing a second call from the server to the second device, wherein the second call is for enabling the second device to connect to the conference call.

The method may further comprise scheduling, based on the first identification number, the second identification number and the scheduled time, a time around which the conference call is allowed to take place/start.

The method may further comprise assigning to the first identification number and to the second identification number a respective number from a set of numbers available for enabling connection to the conference call.

The second request may include at least the first identification number associated with the first device and the second identification number associated with the second device, and wherein performing the second verification may further comprise determining the existence of a virtual conference room associated with the first identification number and the second identification number. This determining may further comprise determining a time at which the second request has been received by the server; and comparing said time with a time around which the conference call is scheduled to take place/start.

The virtual conference room may be associated at least with the first identification number associated with the first device, the second identification number associated with the second and a time around which the conference call is allowed to take place/start.

The method may further comprise sending from the server to the first device a first notification for prompting the first device to send the first request to the server. The first notification may be configured to trigger an application on the first device for enabling the first device to send the first request. The method may further comprise sending from the server to the second device a second notification for prompting the second device to send the second request to the server. The second notification may further comprise the second number for enabling the second device to connect to the conference call.

The first and/or second notification may be sent prior to a time around which the conference call is scheduled to take place/start.

The method may further comprise receiving, at the first device, a selection from the first user; triggering, based on said selection, the set-up request to be sent from the first device to the server; and receiving, at the first device, the first number for enabling the first device to connect to the conference call. Receiving the selection may further comprise prompting, at the first device, the first user with a request to select a time for scheduling the conference call; and including in the set-up request, based on the user selection, information about a scheduled time for the conference call. The method may further comprise initiating a call to the first number for enabling the first device to be connected to the conference call. The initiating can be done automatically (e.g., by way of the application, without user's interaction) or can be triggered by a selection made by the first user. The method may further comprise providing, at the first device, a selection for initiating a call to the first number for enabling the first device to be connected to the conference call. The method may further comprise: receiving an input selection; and, based on said input, initiating a call to the first number for enabling the first device to be connected to the conference call.

In a further ancillary aspect, there is provided a server for facilitating the set-up of a conference call over a telecommunication network, the call being between a first user and a second user of said network. The server may comprise means for receiving at the server a set-up request triggered by a first device associated with the first user, wherein the request is for setting-up the conference call; means for sending from the server to the first device a first number for enabling the first device to connect to the conference call; and means for sending from the server to the second device a second number for enabling a second device associated with the second user to connect to the conference call.

Additionally, the server may further include any combination of the relevant (and/or corresponding/complementary) functionalities and features described above in relation to the method.

In a further ancillary aspect, there is provided an application for facilitating the set-up of a conference call over a telecommunication network, the call being between a first user and a second user of said network. The application may be configured to run at a first device associated with the first user. The application may be for use with the server as described above. The application may comprise means for receiving, at the first device, a selection from the first user; means for triggering, based on said selection, the set-up request to be sent from the first device to the server; and means for receiving, at the first device, the first number for enabling the first device to connect to the conference call.

Additionally, the application may further include any combination of the relevant and/or corresponding/complementary) functionalities and features described above in relation to the method.

Additionally, a system including at least the server and the application as described above may also be provided. The system may further include the first device and/or the second device.

A computer program, configured when operated by a processor to carry out the method according to any aspect described herein, may also be provided. Programmable logic or other kinds of control logic configured to operate in accordance with any of the methods described herein may also be provided.

A combination of any features from within one aspect or between aspects is also provided, even if not explicitly discussed.

Any of the above methods, servers, apparatuses, systems, computer programs can be readily extended and/or adapted for facilitating the set-up of a conference call over a telecommunication network between the first user and two or more second users of said network, in which each user is associated with a corresponding device. Any adaptations of the above methods, servers, apparatuses, systems, computer programs that a skilled person could readily arrive to in order to implement the extended and/or adapted methods, servers, apparatuses, systems, computer programs for facilitating the set-up of a conference call over a telecommunication network between the first user and two or more second users of said network are also part of the present disclosure, even if not explicitly discussed.

Some of the advantages provided by the above aspects are described below by way of example. Of course, other advantages could be easily derived, formulated or otherwise become apparent based on the content of this application, and also these advantages are included in this application.

The present invention provides easiness and simplicity in setting-up, managing and performing a conference call. The server (or any equivalent entity) sets up the conference call based on the information received by the first user (i.e., the party wanting to set-up the conference call) and after consulting a database in which various information relating to existing conference calls and other parameters is stored. This allows to set-up a conference call, for example, at a very short notice, and with a minimum number of interactions between the server, the first device and the device(s) associated with the one or more users invited to join the conference call (e.g., participants in the conference call). This, in turn, minimizes the signalling required in the network, and therefore has a minimal impact on the overall telecommunications network. Other advantages for the network could be easily formulated.

The user will be able to set-up, manage and connect to a conference call in a very easy way. The present invention allows for a solution which is virtually transparent to the user. The user only needs to set-up a few parameters (example are described below), after which he/she would be able to establish a conference call in a very short time and easy way. In addition, he may be able to book and manage their conferences through a smartphone app, or a mail server client (e.g.: outlook).

Moreover, he can decide when the phone call has to take place/start (now or later). For example, in the "Immediate conference call" case (e.g., NOW), the chairman (i.e., the first user, the one setting up the conference call) chooses the contacts to invite as participants and start conference call. In the background, an application ("app") configured to run on the first device notifies the server to book resources for the conference room. In the "Scheduled conference call" case (e.g., LATER) the chairman will choose a date and a timeframe for the call and resources will be booked for that time specified. A notification (e.g., SMS, mail, etc.) will be sent to the participants for them to be aware of the invitation. One or more reminders will be sent to the chairman and the participants prior the conference call is scheduled to be made (e.g., prior to the "virtual" conference room ready to be used).

The way the chairman and the participants may join the conference call could be a parameter that the chairman may set, for example upon request from the app. Here there could be two models for the participants to connect.

In a first option (DIAL IN), a notification is sent to participants with conference bridge number (the app receives bridge number too). The participants will call bridge number provided to connect (whereas, for the chairman, the app will automatically trigger the procedure for connecting to the conference, making it transparent for the chairman)

In a second option (DIAL OUT), the server will trigger calls to the chairman and to each of the participants so they can automatically join the conference.

Moreover, the conference details can be written directly into the calendars of the chairman and/or each of the participants (for example, depending on the setting). In one aspect, users will have the info of all conference booked in which they are a chairman, plus those ones in which they have been invited as participants (for example a tag and/or an identifier could be used for distinguishing among these two options). Again, this will help in scheduling the conference and keep the users informed. This may result again in resource not being wasted within the network. For example, if the conference has been scheduled for a specific time, with resources booked for it, reducing the likelihood that the chairman and/or any of the participants forgets about the call will help optimizing the use of resources and avoid waste.

Importantly, the invention allows for increasing the privacy of the users and the security of the communication. In fact, by using the mechanism of validating, checking and/or verifying whether a user (e.g., a participant) is allowed to enter a conference call, the security of the call as well as the privacy of the users is preserved. Only participants invited to conference are allowed to enter the conference room.

Moreover, the invention allows the system to be very flexible. For example, prior to the conference call starting, the chairman may be able to modify start and end time of conference, remove/add participants, etc. During the conference call the chairman may be able to add new participants. The chairman may able to mute one or more participants at a certain moment, and also be able to see which participants are connected. Importantly, the use of "virtual" conference room allows the system to be very flexible in allocating the resources for setting-up the phone call.

### Brief Description of the Drawings

The invention may be put into practice in various ways, some of which will now be described by way of example only and with reference to the accompanying drawings in which:
Figure 1 shows a first procedure for facilitating the setting-up a conference call;
Figure 2 illustrates a block diagram of the system in accordance with the first procedure;
Figure 3 shows a second procedure for facilitating the setting-up a conference call;
Figure 4 illustrates a block diagram the system in accordance with the second procedure; and
Figure 5 illustrates a third procedure for facilitating setting-up a conference call.

### Detailed Description of Preferred Embodiments

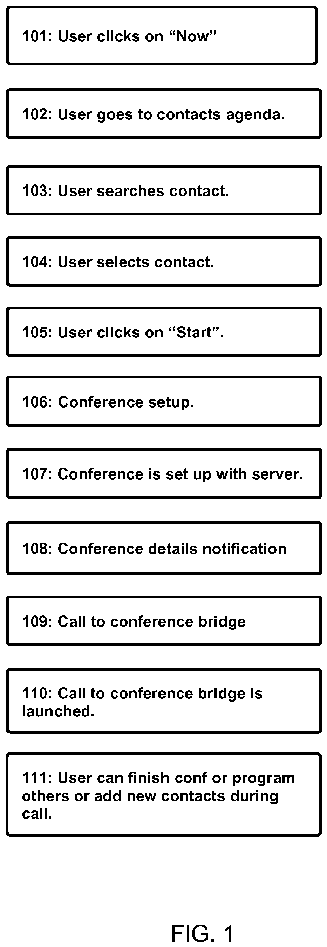

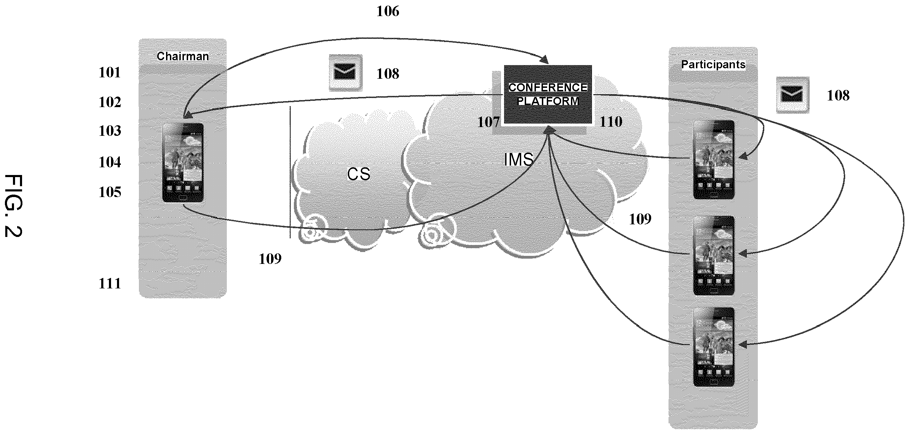

Figure 1 show a first specific embodiment of the invention. In particular, it illustrates the option called "Immediate conference call" (e.g., NOW). Figure 2 shows how the procedure is performed within the system. The system shown in Figure 2 includes a first device associated with a first user (e.g., the chairman) and a plurality of devices belonging to other users (e.g., the participants, namely the users invited by the chairman to participate in the conference call). Further, the system includes a server (e.g., conference platform). The server may sit within a telecommunication network including, for example, a Circuit Switch (CS) section and an IP Multimedia Subsystem (IMS) section. The server may be located within the IMS and may be configured in accordance with IMS protocols and procedures. The server may be capable of communicating with the user devices using standard protocols such as SOAP, REST,SIP, RTP, SS7, ISUP, etc. (the list is not exhaustive, but it is given only for illustrative purposes. Other similar and/or equivalent protocols might be used). The server may be even part of the telecommunication network, and its functionality may be localized or distributed. The server will be associated with one or more databases and a MRF (Media Resource Function Server). The MRF provides media related functions such as media manipulation (e.g., voice stream mixing) and playing of tones and announcements.

At first, the first user (e.g., chairman) is presented with an option and/or request generated, for example, by the application running on the first user device. The options could be shown by the User Interface ("UI") associated with the application. The request may include asking the user to select between a "NOW" and a "LATER" option, but further or similar options may be included.

At 101, the first user selects (e.g., by clicking) the option "NOW" (or equivalent). By "selecting" it is intended any act that allows the user to select the option. For example, it may include clicking on a key associated with the option, clicking on the screen (e.g., if the user device is a touchscreen), using a voice command, and /or any other means of selecting. This means that the user wishes to set-up a conference call at the present moment or in the immediate future (for example, within the next few minutes). At 102, the first user goes into his contacts (e.g., by browsing the agenda on the first user device), searches among his contacts (103) and select the contacts (e.g., the one or more participants) he wishes to call via a conference call (104). The application may automatically present, upon the user selecting the option "NOW", a link, an interface or similar to access the agenda into his phone. Other variants could also be included, and are still within the scope of the invention.

At step 105, the first user selects (e.g., by clicking) the option "START" (or equivalent). This selection would trigger the procedure for setting up the conference call.

At this point, the application will trigger a request (e.g, an authenticated call) to the server (e.g., the conference platform) to create a conference call. The request may be sent via a web connection and/or over IMS and/or by any other relevant means provided by the telecommunication network. The request will contain various parameters. For example, the parameters may include: start time, end time, participants contact details (phone number, e-mail address, social network accounts...), conference behaviour specific details (Dial-in/dial-out option, Conference is finished after chairman leaves(yes/no)), etc.

At 107 the conference is set up by the server. The server may allocate a "virtual" conference room associated with the conference call.

At 108, the server responds to the first user by sending a message (e.g., a notification) containing conference ID and/or the bridge number. Also, a notification (e.g., SMS, Cloud messaging, or whichever communication channel is available for sending such a notification) is sent to participants to indicate which number (bridge number) they have to call in order to connect to the conference call. The conference ID may also be sent.

If the conference call has been set up as a DIAL-IN conference call (i.e., the first user has selected this option when making the request, and this parameter is part of the request sent to the server), the following steps are followed. At 109, the application triggers the phone call to the bridge number (of course, in a variant it could be the first user itself who call the bridge number, either by using the usual means for dialling a phone number or by clicking on an option to call the bridge number, said option presented to him by the application). The server checks the "virtual" conference room allocated for the identification number of the first device, and enables the call to connect to the conference call. The participants make a call to bridge. The server will validate weather they are invited to a conference with that bridge number and if so they will be connected (110). If the conference call has been set up as a DIAL-OUT conference call (i.e., the first user has selected this option when making the request, and this parameter is part of the request sent to the server), the following steps are followed. At 109, the server makes a terminating phone call to the first device for connecting said device to the conference call. Once chairman picks up, it is automatically connected to the "virtual" conference room and hence to the conference call. For example, the server will generate the proper signalling to start a call from bridge number to the first device. At 110, the server will as well trigger terminating phone calls to all participants to connect, in a similar way as with the first device.

At 111, the first user may optionally terminate the conference call, add other conference call, or add new participants during the conference call.

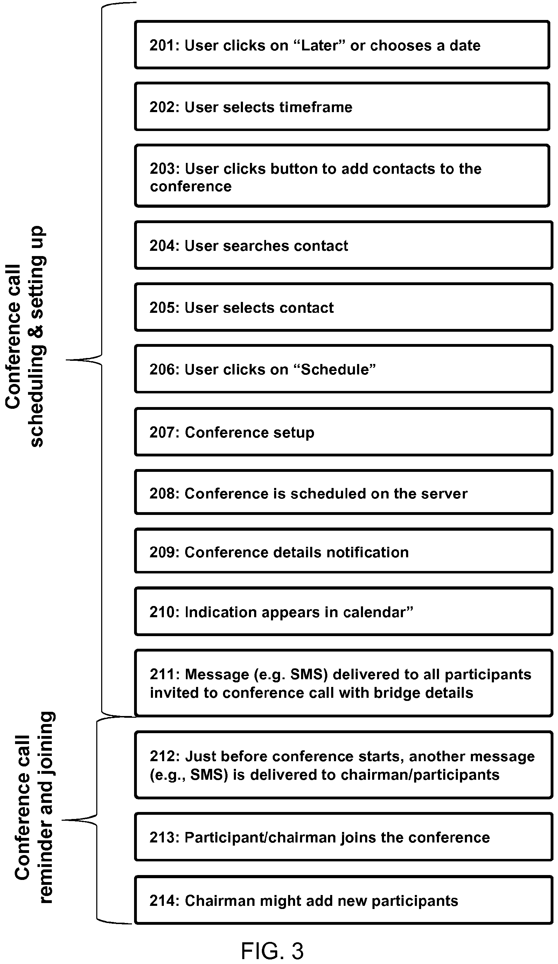

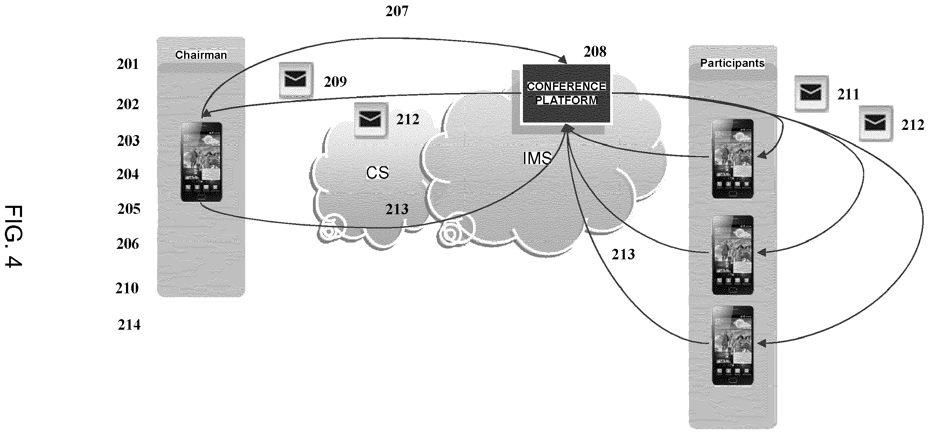

Figure 3 show a second specific embodiment of the invention. In particular, it illustrates the option called "Scheduled conference call" (e.g., LATER). Figure 4 shows how the procedure is performed within the system. In terms of components, Figure 4 corresponds to Figure 2, and therefore the description for figure 2 applies mutatis mutandis to Figure 4.

At first, the first user (e.g., chairman) is presented with an option and/or request generated, for example, by the application running on the first user device. The options could be shown by the User Interface ("UI") associated with the application. The request may include asking the user to select between a "NOW" and a "LATER" option, but further or similar options may be included.

At 201, the first user selects (e.g., by clicking) the option "LATER" (or equivalent). By "selecting" it is intended any act that allows the user to select the option. For example, it may include clicking on a key associated with the option, clicking on the screen (e.g., if the user device is a touchscreen), using a voice command, and /or any other means of selecting. This means that the user wishes to set-up a conference call at a time which is not in the immediate future (for example, in one hour from now, tomorrow, or at any other later moment). In other words, this options allows the user to schedule a conference call at a later time.

At 202, the first user selects a timeframe or time interval at which he wishes to schedule the conference call. This can be done, for example, by selecting a start time, and end time, a duration, a day, etc., and any combination thereof. The time interval would, for example, corresponds to a period of time starting from the start time and ending at the end time. The time interval can also be identified by the date at which the phone conference is scheduled to take place/start, etc. At 203, the first user goes into his contacts (e.g., by browsing the agenda on the first user device, for example after pressing a button to select the option. This button could be presented by the application), searches among his contacts (204) and select the contacts (e.g., the one or more participants) he wishes to call via a conference call (205). The application may automatically present, upon the user selecting the option "LATER", a link, an interface or similar to access the agenda into his phone. Other variants could also be included, and are still within the scope of the invention.

At step 206, the first user selects (e.g., by clicking) the option "SCHEDULE" (or equivalent). This selection would trigger the procedure for scheduling and setting up the conference call.

At this point, the application will trigger a request (e.g, an authenticated call) to the server (e.g., the conference platform) to create a conference call. The request may be sent via a web connection and/or over IMS and/or by any other relevant means provided by the telecommunication network. The request will contain various parameters. For example, the parameters may include: start time, end time, participants contact details (phone number, e-mail address, social network accounts...), conference behaviour specific details (Dial-in/dial-out option, Conference is finished after chairman leaves(yes/no)), etc.

At 207 the conference is set up by the server. The server may allocate a "virtual" conference room associated with the conference call.

At 208, the conference is scheduled on the server. The server may review the received information and checks its validity (e.g., valid date/time, valid participant numbers). Once validation is passed, the server may also check the availability of resources (e.g., ports in MRF, bridge numbers) Afterwards, the server may generate a conference ID and assign a bridge number for each participant. The combination(s) of participant number, date/time, bridge number and/or any other relevant information may be linked to a "virtual" conference room via the conference ID. In this manner, all combinations linked to a particular conference ID will lead to the same "virtual" conference room. All this information may then be added into the one or more servers associated with the database.

At 209, the server responds to the first user by sending a message (e.g., a notification) containing conference ID and/or the bridge number. Optionally, at 210 the information about the conference call may appear in the chairman's calendar (which can be the calendar of the application and/or any other calendar defined in the first user device).

At step 211, a notification (e.g., SMS, Cloud messaging, or whichever communication channel is available for sending such a notification) is also sent to participants to indicate which number (e.g., bridge number) they have to call in order to connect to the conference call. The conference ID may also be sent.

The information may be stored in the participants' calendar. For example, if an application which is the same or similar to the one the chairman is using to set-up the conference call is also configured to run on the participant's device, then the application may enable storing the details in the calendar of the application and optionally in any other calendar defined in the participant's device). If there is not such an application configured to run on the participant's device, the information may be stored by way of, for example, SMS, cloud notification, mail invitation, etc.

If the conference call has been set up as a DIAL-IN conference call (i.e., the first user has selected this option when making the request, and this parameter is part of the request sent to the server), the following steps are followed. At 212, the server or directly the application configured to run on the first user device notifies the chairman (e.g., if the server: SMS, cloud messaging, etc., if the application: an alarm on the device, an alarm from one of the calendar, etc.). The notification may be triggered just before the conference call is scheduled to start. When notified, the user may select the notification message (e.g., by clicking) and an option is presented to enable the first user to proceed with connecting to the conference call. The process may be done automatically when the user selects the notification. At step 213, the application triggers the phone call to the bridge number (of course, in a variant it could be the first user itself who call the bridge number, either by using the usual means for dialling a phone number or by clicking on an option to call the bridge number, said option presented to him by the application). The server checks the "virtual" conference room allocated for the identification number of the first device, and enables the call to connect to the conference call. A notification (e.g., SMS, Cloud messaging, or whichever communication channel is available for sending such a notification) is sent to participants to indicate which number (bridge number) they have to call in order to connect to the conference call. The conference ID may also be sent. The participants make a call to bridge. The server will validate weather they are invited to a conference with that bridge number and if so they will be connected.

If the conference call has been set up as a DIAL-OUT conference call (i.e., the first user has selected this option when making the request, and this parameter is part of the request sent to the server), the following steps are followed. The server makes a terminating phone call to the first device for connecting said device to the conference call. Once chairman picks up, it is automatically connected to the "virtual" conference room and hence to the conference call. For example, the server will generate the proper signalling to start a call from bridge number to the first device. The server will as well trigger terminating phone calls to all participants to connect, in a similar way as with the first device. In the DIAL-OUT option, a notification to the chairman and/or to the participants may be sent. The notification may simply be a reminder that the conference call is about to take place/start.

At 214, the first user may optionally terminate the conference call, add other conference call, or add new participants during the conference call.

Here is an example of how the server might allocate the "virtual" conference room. However, it is to be understood that this is only an example, and a generalisation and/or modification is intended to be included in this application. Assume that the first device has an identification number (e.g., MSISDN) corresponding to M1. Within the request to set-up the conference call, the first device (e.g., via the application configured to run on it) provides a start time, an end time, and the identification numbers of the devices associated with the one or more participants (e.g., the participants' MSISDNs). The time may include time and/or date and/or any other parameter that helps identifying a time interval. The server will check ports in the MRF (Media Resource Function Server). The server has (or retrieve) information about the total number of ports in MRF. In this way, the server can control the maximum number of concurrent participants that can be connected to a conference call. Moreover, the server also verifies and/or manages a set (e.g., a pool) of numbers (e.g., bridge numbers) in order to identify numbers and ports that are available for the time interval specified by the start and end time.

In particular, when the server receives from the first device the set-up request for setting up a conference call, the server checks in its database how many ports in the MRF are available during that time interval. In this way, the server will be able to determine whether conference call creation is feasible or not, and reply accordingly to the request. Additionally, the server also checks whether chairman and participants have other conference calls allocated which are overlapping the specified time interval. With this info, server will be able to assign bridge numbers following, for example, the policy described below.

With this info, the server allocates the "virtual" conference room, generates a unique conference identification (e.g., conference ID), and stores all details in the database, which may include the details about the chairman, the participants and the associated bridge numbers.

For example, assume that M1 is the chairman and P2,P3,...,Pn, are the participants. Also, assume that neither the chairman nor any of the participants have other conference calls already scheduled and overlapping with the one that has been requested by the chairman. In this scenario, the server will allocate/assign bridge number B1 to M1. The same choice will be applied to participants P2,P3 and so on. Accordingly, we will have the following pairs:
M1 - B1
P2 - B1
P3 - B1
Pn - B1

Now, assume that M1 and P3 have other conference already scheduled that would overlap with the one that has been requested by the chairman. The server will allocate bridges the following way:
M1 - B2
P2 - B1
P3 - B2
Pn - B1

The bridge number together with the identification number of the first device (the chairman) is used in order to generate a conference identification (e.g., conference ID) that is associated with a "virtual" conference room. This conference identification is then used to enter the allocated "virtual" conference. For example, assume that we have allocated R1 (i.e., the "virtual" conference room) for Confererence1 (i.e., the conference identification).

Thus, when M1, P2, P3,..., Pn will call the bridge numbers assigned to them, they will join the same conference call in "virtual" conference room R1.

One way in which the server can validate is described here. The server validates participants taking into account the following info: (i) calling number (e.g., the number associated with a device associated with a participant or the chairman) received within call parameters in call to bridge number; (ii) called number (e.g., the bridge number) received within call parameters. Further, it may verify the bridge number and the current time. With this info, the server checks using as index the duplet (calling number, called number) whether there is a "virtual" conference room R1 with this entry. If so, the call from the participant is allowed to enter the "virtual" conference room.

In a variation of the above embodiments, the server may send a message and/or an indication that the conference call cannot take place/start at the desired time (e.g., NOW or LATER), or that a different time interval/slot may be preferred. For example, this may be as a consequence of other conference calls being scheduled at a similar or at least partially overlapping time interval, or the unavailability of the participants to join the conference call, or other problems. The server may then suggest an alternative time interval (e.g., different starting time, different duration, different day, etc.) at which to schedule the conference call. The suggestion may be based, for example, on the server checking its database for availability of the chairman and/or the participants at other time, or checking at what time there are available ports and/or bridge numbers. The server may then send a message/notification to the chairman with one or more suggested alternative time intervals. The application would then enable displaying of such information at the user device, and enable the user to select one of the one or more suggested alternative time intervals. The selection is then sent back to the server, and the procedure would continue in the ways described above.

In another variation, other parameters could be specified. For example, the priority of the participants could be specified, or the priorities of the conference call. This information could then be used by the server to perform and suggest the best time for scheduling the conference call. For example, the server may decide that the newly requested conference call has a higher priority than another conference call based on the priority assigned by the user to the newly requested conference call, and suggest an appropriate action (e.g., move already scheduled conference call, for example if scheduled by the same chairman), prioritising the scheduling of the conference call over another conference call, etc. Another example could be that the user specifies that one particular participant must be present (i.e., high priority participant). The server may check the availability of that participant at the time interval requested for scheduling the conference call, and if the participant is found to be unavailable at that time interval, the server may suggest to the user to schedule at a different time interval. This time interval may be a time where the high priority participant is found by the server to be available. Other similar variations could be considered and are meant to be part of the present disclosure.

If the conference call drops, the participants can join calling their bridge numbers again. The chairman may also be re-connected automatically. In the DIAL-OUT scenario, it could be configured to automatically recall the chairman and/or the participants.

The DIAL-IN and DIAL-OUT options are clearly described above. In general, in the DIAL-IN option the idea is that the call is started by the user device. In the case of the chairman, the application may automatically enable the first user device to call the bridge number, thus making the operation transparent to the user will start the call to bridge number. In the DIAL-OUT option the idea is that the server starts the call, so that users will receive a phone call from the bridge number. When they pick the call up, they will join the conference call.

The DIAL-IN and DIAL-OUT options described above may also be combined to provide a more simple and improved method of initiating a voice or video call with multiple parties. For example, the process followed by the originating device and server in the DIAL-IN procedure may be combined with the process followed by the server and terminating devices in the DIAL-OUT procedure. In short, the application on the device may automatically initiate a call with the server without user input and the server may then automatically initiate a call with the terminating devices without substantial device input.

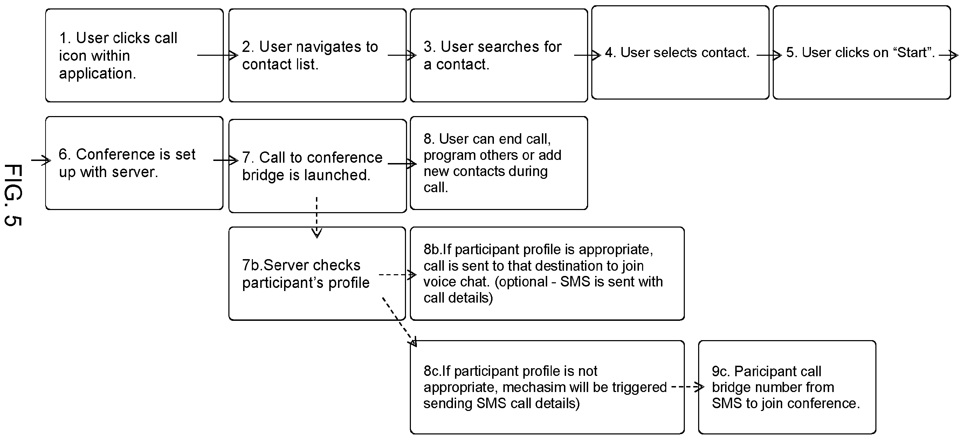

An exemplary scenario of the above combination will now be described in which the process of initiating the call is simplified for both the originating and terminating users. The process is illustrated in Figure 5.

The user first interacts with an application on the mobile to device to request a conference call. Typically, the user will indicate the requested participants either individually or by requesting a conference call with a group of users. The application may group individual users into groups to aid the conference call initiation process.

Upon receiving a request from a user to start a conference call, the application will send an appropriate request to the server. This may be in the form of a SIP request. The request may include an identifier of the originating device and appropriate identities of the participants.

In order to enable the conference call, the server may return to the application a bridge number for the application to dial to enter the device into the conference call in order to participate with the further users. The bridge and conference number are substantially as described above.

When the application has received the bridge number, the application dials the number and begins a call from the device to the number. This may involve integration with the dialling and/or calling mechanisms of the device typically using operating system specific application programming interfaces (APIs). At this stage, no further input is required from the user. The process is not visible to the user and is essentially a background operation. From the perspective of the user, the user requests a conference call and the number is subsequently dialled automatically.

In parallel (or subsequently), the server will make a call to the indicated participants. Preferably, the server will perform a check of a database to ensure that the participant is a member of the community and is thus an appropriate conference call participant. When the participant answers the call, the participant is placed into the conference call with the originating user or chairman and the fellow participants. The database may indicate that the participant prefers not to be called, in which case a notification with the bridge number may be sent to the participant's device.

Optionally, the server will present the number of the originating user to the participant device. The server creates an out of the blue call directed to the recipient, linking the MRF with the B party to exchange the media, which can be done by using third party call control mechanisms. The MRF is the unique point for all the terminating party, and the conference is created this way.

For the number to be shown, the server uses the originating A number in the "from" header of the SIP request created the application, and, depending on the network scenario, in a P-Asserted-Identity (PAI) header or Referred-by header of the SIP request. This is only for this particular case. Further approaches are of course possible. The system designer can decide whether the A number is to appear as originator or if can be a service number.

If the server determines that the participant is not a member of the appropriate community, (when checking the database) or if the participant does not answer the call, the server may send an SMS (or other notification) to the participant's device with a bridge number for the participant to enter the call when ready.

It should be noted that all other conference call features which are substantially described above may be supported within the context of this described embodiment. any combination of features is envisaged.

Thus, specific embodiments of the invention have been described above. Nevertheless, the skilled person will contemplate various modifications, combinations and substitutions. In particular, the specific names are not always significant and elements with different names, but having the same effect may be alternatively used. Similarly, the skilled person will appreciate that other architectures over which the invention can be implemented are also possible.

## Claims

1. A method for facilitating the set-up of a conference call over a telecommunication network, the call being between a first user and a second user of said network, the method comprising:
receiving (6) at a server a set-up request triggered by a first device associated with the first user, wherein the request is for setting-up the conference call, the request including an identification number associated with a second device associated with the second user;
**characterised in that**, the method further comprises:
sending from the server to the first device, in response to receiving the set-up request from the first device, a first number for enabling the first device to connect to the conference call, such that receipt of the first number at the first device automatically triggers (7) a call in accordance with the first number for enabling the first device to connect to the conference call; and
in parallel, or subsequently, triggering (8b) a call from the server to the second device in accordance with the received identification number, wherein the call is for enabling the second device to connect to the conference call.

2. The method of claim 1, wherein the server presents an identification number of the first device to the second device when triggering the call to the second device.

3. The method of any of the above claims, further comprising checking (7b) the identification number associated with the second device against a list of identification numbers stored in a database, wherein if the identification number does not exist, the method further comprises sending (8c) a notification to the second device, the notification including a bridge number.

4. The method of claim 3, further comprising:
receiving a request from the second device to connect to the conference call; and
enabling connection of the second device to the conference call.

5. The method of any of the above claims, wherein the set-up request comprises a first identification number associated with the first device and information about a scheduled time for the conference call.

6. The method of any one of the above claims, further comprising:
allocating a virtual conference room to the conference call and generating a unique conference identifier associated with the allocated virtual conference room.

7. The method of any preceding claim, wherein the triggering of the call to the second device is performed upon the first device being connected to the conference call.

8. A server for facilitating the set-up of a conference call over a telecommunication network, the call being between a first user and a second user of said network, the server comprising:
means for receiving a set-up request triggered by a first device associated with the first user, wherein the request is for setting-up the conference call, the request including an identification number associated with a second device associated with the second user;
means for sending to the first device a first number for enabling the first device to connect to the conference call;
means for receiving a call from the first device in accordance with the first number and enabling the first device to connect to the conference call; and
means for triggering a call to the second device in accordance with the received identification number, wherein the call is for enabling the second device to connect to the conference call.

9. A first device comprising an application for facilitating the set-up of a conference call over a telecommunication network, the call being between a first user and a second user of said network, the application configured to run at the first device associated with the first user, the device comprising:
means for receiving, via a User Interface associated with the application, a selection from the first user;
means for triggering, based on said selection and via said application, a set-up request to be sent from the first device to a server, the set-up request including an identification number associated with a second device associated with the second user;
means for automatically triggering, a call via said application in accordance with a first number in response to receipt from the server of the first number for enabling the first device to connect to the conference call.

10. A system for facilitating the set-up of a conference call over a telecommunications network, the call being between a first user and a second user of said network, the system comprising:
the server of claim 8; and
the first device associated with the first user, according to claim 9; and
a second device associated with the second user.

11. The system of claim 10 adapted to perform the relevant functionality of the method of any of claims 1 to 7.

## Patentansprüche

1. Verfahren zur Erleichterung des Aufbaus eines Konferenzanrufs über ein Telekommunikationsnetzwerk, wobei der Anruf zwischen einem ersten Nutzer und einem zweiten Nutzer des Netzwerks ist, wobei das Verfahren umfasst:
Empfangen (6) an einem Server einer Aufbauanforderung, die von einem ersten Gerät getriggert wird, das mit dem ersten Nutzer assoziiert ist, wobei die Anforderung für den Aufbau des Konferenzanrufs ist, die Anforderung eine Identifikationsnummer einschließt, die mit einem zweiten Gerät assoziiert ist, das mit dem zweiten Nutzer assoziiert ist;
**dadurch gekennzeichnet, dass** das Verfahren ferner umfasst:
Senden vom Server an das erste Gerät, als Antwort auf den Empfang der Aufbauanforderung vom ersten Gerät, einer ersten Nummer, um dem ersten Gerät zu ermöglichen, sich mit dem Konferenzanruf zu verbinden, derartig, dass der Empfang der ersten Nummer am ersten Gerät automatisch einen Anruf in Übereinstimmung mit der ersten Nummer triggert (7), um dem ersten Gerät zu ermöglichen, sich mit dem Konferenzanruf zu verbinden; und
parallel oder anschließend, Triggern (8b) eines Anrufs vom Server an das zweite Gerät in Übereinstimmung mit der empfangenen Identifikationsnummer, wobei der Anruf dafür ist, dem zweiten Gerät zu ermöglichen, sich mit dem Konferenzanruf zu verbinden.

2. Verfahren nach Anspruch 1, wobei der Server dem zweiten Gerät eine Identifikationsnummer präsentiert, wenn der Anruf zum zweiten Gerät getriggert wird.

3. Verfahren nach einem der obigen Ansprüche, das ferner das Prüfen (7b) der mit dem zweiten Gerät assoziierten Identifikationsnummer gegen eine Liste von Identifikationsnummern umfasst, die in einer Datenbank gespeichert ist, wobei, falls die Identifikationsnummer nicht existiert, das Verfahren ferner das Senden (8c) einer Mitteilung an das zweite Gerät umfasst, wobei die Mitteilung eine Brückennummer einschließt.

4. Verfahren nach Anspruch 3, ferner umfassend:
Empfangen einer Anforderung vom zweiten Gerät zum Verbinden mit dem Konferenzanruf; und
Ermöglichen der Verbindung des zweiten Geräts mit dem Konferenzanruf.

5. Verfahren nach irgendeinem der obigen Ansprüche, wobei die Aufbauanforderung eine erste Identifikationsnummer, die mit dem ersten Gerät assoziiert ist und Information über eine geplante Zeit für den Konferenzanruf umfasst.

6. Verfahren nach irgendeinem der obigen Ansprüche, ferner umfassend:
Zuweisen eines virtuellen Konferenzraums für den Konferenzanruf und Generieren einer einzigartigen Konferenzkennung, die mit dem zugewiesenen virtuellen Konferenzraum assoziiert ist.

7. Verfahren nach irgendeinem vorhergehenden Anspruch, wobei das Triggern des Anrufs an das zweite Gerät durchgeführt wird, nach dem das erste Gerät mit dem Konferenzanruf verbunden ist.

8. Server zur Erleichterung des Aufbaus eines Konferenzanrufs über ein Telekommunikationsnetzwerk, wobei der Anruf zwischen einem ersten Nutzer und einem zweiten Nutzer des Netzwerks ist, wobei das Server umfasst:
Mittel zum Empfangen einer Aufbauanforderung, die von einem ersten Gerät getriggert wird, das mit dem ersten Nutzer assoziiert ist, wobei die Anforderung für den Aufbau des Konferenzanrufs ist, die Anforderung eine Identifikationsnummer einschließt, die mit einem zweiten Gerät assoziiert ist, das mit dem zweiten Nutzer assoziiert ist;
Mittel zum Senden einer ersten Nummer an das erste Gerät, um dem ersten Gerät zu ermöglichen, sich mit dem Konferenzanruf zu verbinden;
Mittel zum Empfangen eines Anrufs vom ersten Gerät in Übereinstimmung mit der ersten Nummer und Ermöglichen des ersten Geräts, sich mit dem Konferenzanruf zu verbinden; und
Mittel zum Triggern eines Anrufs an das zweite Gerät in Übereinstimmung mit der empfangenen Identifikationsnummer, wobei der Anruf dafür ist, dem zweiten Gerät zu ermöglichen, sich mit dem Konferenzanruf zu verbinden.

9. Erstes Gerät, das eine Anwendung zur Erleichterung des Aufbaus eines Konferenzanrufs über ein Telekommunikationsnetzwerk umfasst, wobei der Anruf zwischen einem ersten Nutzer und einem zweiten Nutzer des Netzwerks ist, die Anwendung ausgelegt ist, auf dem ersten Gerät zu laufen, das mit dem ersten Benutzer assoziiert ist, wobei das Gerät umfasst:
Mittel zum Empfangen, über eine mit der Anwendung assoziierte Benutzerschnittstelle, einer Auswahl vonseiten des ersten Benutzers;
Mittel zum Triggern, auf Basis der Auswahl und über die Anwendung, einer Aufbauanforderung, die vom ersten Gerät an einen Server zu senden ist, wobei die Aufbauanforderung eine Identifikationsnummer einschließt, die mit einem zweiten Gerät assoziiert ist, das mit dem zweiten Nutzer assoziiert ist;
Mittel zum automatischen Triggern eines Anrufs über die Anwendung in Übereinstimmung mit einer ersten Nummer, als Antwort auf den Empfang der ersten Nummer vom Server, um dem ersten Gerät zu ermöglichen, sich mit dem Konferenzanruf zu verbinden.

10. System zur Erleichterung des Aufbaus eines Konferenzanrufs über ein Telekommunikationsnetzwerk, wobei der Anruf zwischen einem ersten Nutzer und einem zweiten Nutzer des Netzwerks ist, wobei das System umfasst:
Den Server nach Anspruch 8; und
das mit dem ersten Nutzer assoziierte erste Gerät nach Anspruch 9; und
ein mit dem zweiten Nutzer assoziiertes zweites Gerät.

11. System nach Anspruch 10, das angepasst ist, die relevante Funktionalität des Verfahrens nach irgendeinem der Ansprüche 1 bis 7 durchzuführen.

## Revendications

1. Un procédé de facilitation de l'établissement d'un appel de conférence téléphonique par l'intermédiaire d'un réseau de télécommunication, l'appel étant entre un premier utilisateur et un deuxième utilisateur dudit réseau, le procédé comprenant :
la réception (6) au niveau d'un serveur d'une demande d'établissement déclenchée par un premier dispositif associé au premier utilisateur, où la demande est destinée à l'établissement de l'appel de conférence téléphonique, la demande comprenant un numéro d'identification associé à un deuxième dispositif associé au deuxième utilisateur,
**caractérisé en ce que** le procédé comprend en outre :
l'envoi à partir du serveur au premier dispositif, en réponse à la réception de la demande d'établissement à partir du premier dispositif, d'un premier numéro destiné à permettre au premier dispositif de se connecter à l'appel de conférence téléphonique, de sorte que la réception du premier numéro au niveau du premier dispositif déclenche automatiquement (7) un appel conformément au premier numéro destiné à permettre au premier dispositif de se connecter à l'appel de conférence téléphonique, et
en parallèle ou subséquemment, le déclenchement (8b) d'un appel à partir du serveur au deuxième dispositif conformément au numéro d'identification reçu, où l'appel est destiné à permettre au deuxième dispositif de se connecter à l'appel de conférence téléphonique.

2. Le procédé selon la Revendication 1, où le serveur présente un numéro d'identification du premier dispositif au deuxième dispositif lors du déclenchement de l'appel vers le deuxième dispositif.

3. Le procédé selon l'une quelconque des Revendications précédentes, comprenant en outre la vérification (7b) du numéro d'identification associé au deuxième dispositif par rapport à une liste de numéros d'identification conservés en mémoire dans une base de données, où, si le numéro d'identification n'existe pas, le procédé comprend en outre l'envoi (8c) d'une notification au deuxième dispositif, la notification contenant un numéro de pont.

4. Le procédé selon la Revendication 3, comprenant en outre :
la réception d'une demande à partir du deuxième dispositif de connexion à l'appel de conférence téléphonique, et
l'activation de la connexion du deuxième dispositif à l'appel de conférence téléphonique.

5. Le procédé selon l'une quelconque des Revendications précédentes, où la demande d'établissement comprend un premier numéro d'identification associé au premier dispositif et des informations relatives à une heure planifiée pour l'appel de conférence téléphonique.

6. Le procédé selon l'une quelconque des Revendications précédentes, comprenant en outre :
l'attribution d'une salle de conférence téléphonique virtuelle à l'appel de conférence téléphonique et la génération d'un identifiant de conférence téléphonique unique associé à la salle de conférence téléphonique virtuelle attribuée.

7. Le procédé selon l'une quelconque des Revendications précédentes, où le déclenchement de l'appel vers le deuxième dispositif est exécuté après la connexion du premier dispositif à l'appel de conférence téléphonique.

8. Un serveur de facilitation de l'établissement d'un appel de conférence téléphonique par l'intermédiaire d'un réseau de télécommunication, l'appel étant entre un premier utilisateur et un deuxième utilisateur dudit réseau, le serveur comprenant :
un moyen de réception d'une demande d'établissement déclenchée par un premier dispositif associé au premier utilisateur, où la demande est destinée à l'établissement de l'appel de conférence téléphonique, la demande comprenant un numéro d'identification associé à un deuxième dispositif associé au deuxième utilisateur,
un moyen d'envoi au premier dispositif d'un premier numéro destiné à permettre au premier dispositif de se connecter à l'appel de conférence téléphonique,
un moyen de réception d'un appel à partir du premier dispositif conformément au premier numéro et permettant au premier dispositif de se connecter à l'appel de conférence téléphonique, et
un moyen de déclenchement d'un appel au deuxième dispositif conformément au numéro d'identification reçu, où l'appel est destiné à permettre au deuxième dispositif de se connecter à l'appel de conférence téléphonique.

9. Un premier dispositif comprenant une application de facilitation de l'établissement d'un appel de conférence téléphonique par l'intermédiaire d'un réseau de télécommunication, l'appel étant entre un premier utilisateur et un deuxième utilisateur dudit réseau, l'application étant configurée de façon à être exécutée au niveau du premier dispositif associé au premier utilisateur, le dispositif comprenant :
un moyen de réception, par l'intermédiaire d'une interface utilisateur associée à l'application, d'une sélection à partir du premier utilisateur,
un moyen de déclenchement, en fonction de ladite sélection et par l'intermédiaire de ladite application, d'une demande d'établissement à envoyer du premier dispositif à un serveur, la demande d'établissement comprenant un numéro d'identification associé à un deuxième dispositif associé au deuxième utilisateur,
un moyen de déclenchement automatique d'un appel par l'intermédiaire de ladite application conformément à un premier numéro en réponse à la réception à partir du serveur du premier numéro destiné à permettre au premier dispositif de se connecter à l'appel de conférence téléphonique.

10. Un système de facilitation de l'établissement d'un appel de conférence téléphonique par l'intermédiaire d'un réseau de télécommunications, l'appel étant entre un premier utilisateur et un deuxième utilisateur dudit réseau, le système comprenant :
le serveur selon la Revendication 8, et
le premier dispositif associé au premier utilisateur selon la Revendication 9, et
un deuxième dispositif associé au deuxième utilisateur.

11. Le système selon la Revendication 10 adapté de façon à exécuter la fonctionnalité pertinente du procédé selon l'une quelconque des Revendications 1 à 7.
